(19) Europäisches Patentamt
European Patent Office
Office européen des brevets

(11) **EP 1 707 595 B1**

(12) **EUROPEAN PATENT SPECIFICATION**

(45) Date of publication and mention
of the grant of the patent:
**21.05.2008 Bulletin 2008/21**

(51) Int Cl.:
*C08L 21/00* (2006.01)    *C08L 9/00* (2006.01)
*C08L 7/00* (2006.01)    *B60C 1/00* (2006.01)
*B60C 17/06* (2006.01)    *C08K 3/34* (2006.01)
*C08K 5/01* (2006.01)

(21) Application number: 06005271.9

(22) Date of filing: **15.03.2006**

(54) **Run flat tire**

Notlaufreifen

Pneumatique de roulage à plat

(84) Designated Contracting States:
**DE FR GB**

(30) Priority: **01.04.2005 JP 2005106583**

(43) Date of publication of application:
**04.10.2006 Bulletin 2006/40**

(73) Proprietor: **Sumitomo Rubber Industries, Ltd.**
**Kobe-shi,**
**Hyogo-ken (JP)**

(72) Inventor: **Hochi, Kazuo**
**c/o Sumitomo Rubber Industries, Ltd.**
**Kobe-shi**
**Hyogo-ken (JP)**

(74) Representative: **Manitz, Finsterwald & Partner**
**GbR**
**Postfach 31 02 20**
**80102 München (DE)**

(56) References cited:
**EP-A- 1 207 179**        **EP-A- 1 514 901**
**US-A1- 2004 122 157**

• **PATENT ABSTRACTS OF JAPAN vol. 1996, no.**
**07, 31 July 1996 (1996-07-31) & JP 08 067776 A**
**(SUMITOMO RUBBER IND LTD), 12 March 1996**
**(1996-03-12)**
• **PATENT ABSTRACTS OF JAPAN vol. 2003, no.**
**12, 5 December 2003 (2003-12-05) & JP 2004**
**027003 A (SUMITOMO RUBBER IND LTD), 29**
**January 2004 (2004-01-29)**
• **PATENT ABSTRACTS OF JAPAN vol. 2003, no.**
**12, 5 December 2003 (2003-12-05) & JP 2003**
**292685 A (SUMITOMO RUBBER IND LTD), 15**
**October 2003 (2003-10-15)**

**Description**

The present invention relates to a run flat tire having a side reinforcing layer or a bead apex in which low exothermic property and high hardness are compatible and durability is improved.

At present, a run flat tire having a side reinforcing layer with high hardness which is arranged at the inside of a side wall portion is practically used and even if a car becomes in a state in which air pressure is lost by blowout, it has come to be able to run at a distance to a certain degree. Thereby, necessity to always have a spare tire is extinguished and the weight saving of weight in the whole vehicle can be expected.

However, since the run flat tire supports the weight of a car with a side reinforcing layer and a bead apex at running at low inner pressure, there has been a problem that they are thermally deteriorated by repeating great deformation during running and consequently broken. Accordingly, speed and running distance were limited for the running of a run flat tire in running at low inner pressure.

There is known a method in which exothermic heat is lowered by increasing the hardness of a side reinforcing layer or a bead apex by increasing the compounding amount of a vulcanizing agent and a vulcanization accelerator to the side reinforcing layer or bead apex and reducing the deformation of a run flat tire during running at low inner pressure to suppress energy loss. However, the strength of the side reinforcing layer or bead apex is lowered; therefore there has been a problem that it is broken all the same.

Further, although a tire containing tabular mica in side-wall is disclosed in the Japanese Unexamined Patent Publication No. 2004-27003, it was not an invention concerning a run flat tire and there was a problem that the tire is immediately broken by running at low inner pressure.

JP 08-067,776 discloses a rubber composition for a tire sidewall containing 100 parts by weight of a diene rubber component and 10 to 50 parts by weight of clay.

JP 2004-027,003 relates to a tire sidewall comprising a rubber composition containing 5 to 50 parts by weight of flaky mica having an average particle size of 10 to 100 $\mu$m based on 100 parts by weight of a base material rubber, wherein the mica is orientated vertically to the peripheral direction.

JP 2003-292,685 discloses a rubber composition for a tire sidewall containing 5 to 50 parts by weight of flaky natural mineral having an average particle size of 10 to 100 $\mu$m based on 100 parts by weight of a rubber component.

EP 1 514 901 A1 discloses a rubber composition for a tire comprising 100 parts by mass of a copolymer which is a styrene-butadiene copolymer, 10 to 200 parts by mass of a copolymer which is a hydrogenated styrene-butadiene copolymer and at least one substance selected from resins providing tackiness, wherein the resin providing tackiness may be a $C_5$-based hydrocarbon.

US 2004/0122157 A1 discloses a rubber composition for a tire tread containing a diene elastomer and a hydrocarbon plasticizing resin.

It is the object of the present invention to provide a run flat tire having a side reinforcing layer or a bead apex in which low exothermic property and high hardness are compatible and durability is improved.

The present invention relates to a run flat tire having a side reinforcing layer or a bead apex comprising a rubber composition containing 1 to 20 parts by weight of a C5-based petroleum resin having a number average molecular weight of 300 to 10000 which is obtained by polymerizing C5-based petroleum hydrocarbon and 5 to 120 parts by weight of lamellar natural ore based on 100 parts by weight of a rubber component.

In the run flat tire, the loss elastic modulus E", complex elastic modulus E* and strength at break $T_B$ of the rubber composition satisfy preferably the following formulae:

$$E"/(E^*)^2 \leq 7.0 \times 10^{-9} \text{ Pa}^{-1}$$

$$T_B \geq 10 \text{ MPa}$$

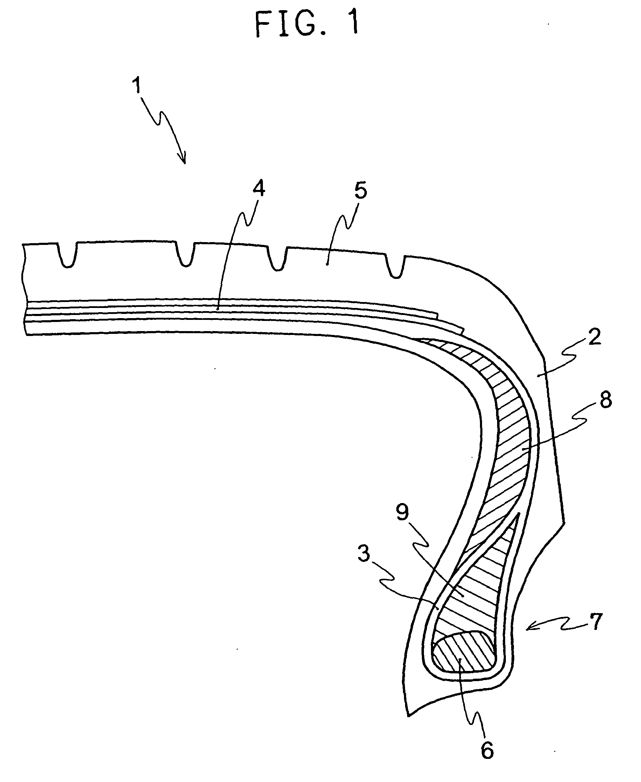

Fig. 1 is the right half of the sectional view of the run flat tire in one embodiment of the present invention. Numeral 1 indicates a tire, 2 a sidewall part, 3 a carcass ply, 4 a belt layer, 5 a tread part, 6 a bead core, 7 a bead part, 8 a side reinforcing layer, and 9 a bead apex, respectively.

The side reinforcing layer or the bead apex, which the run flat tire of the present invention has, comprises a rubber composition containing a rubber component, a C5-based petroleum resin which is obtained by polymerizing C5-based petroleum hydrocarbon, and lamellar natural ore.

Rubber components are preferably a diene-based rubber (SPB-containing diene-based rubber) containing syndiotactic 1,2-polybutadiene. As the SPB-containing diene-based rubber, for example, a butadiene rubber containing syndiotactic 1,2-polybutadiene such as VCR-303, 412 and 617 manufactured by Ube Industries Ltd, and the like can be used.

As the rubber component, there may be used diene-based rubbers such as a natural rubber (NR), a butadiene rubber (BR), a styrene-butadiene copolymer rubber (SBR), an isoprene rubber (IR), an acrylonitrile-butadiene copolymer rubber (NBR), a chloroprene rubber (CR), a styrene-isoprene-butadiene copolymer rubber (SIBR), a styrene-isoprene copolymer rubber and an isoprene-butadiene copolymer rubber, in addition to the SPB-containing diene-based rubber. These rubber components may be used alone or in combination of 2 or more.

As the rubber component, BR and/or NR are preferably used in combination together with the SPB-containing diene-based rubber. The low exothermic property of the side reinforcing layer or bead apex can be satisfied by using BR as a rubber component, and the breakage of the side reinforcing layer or bead apex can be suppressed by using NR as a rubber component.

The C5-based petroleum resin is obtained by polymerizing C5-based petroleum hydrocarbon. Herein, the C5-based petroleum hydrocarbon means a C5 fraction obtained by the thermal cracking of naphtha and specific examples include diolefins such as isoprene, 1,3-pentadiene, dicyclopentadiene and piperylene; and mono olefins such as 2-methyl-1-butene, 2-methyl-2-butene and cyclopentene.

The C5-based petroleum resin may be those in which less than 50 % of aromatic olefins such as styrene, o-methylstyrene, p-methylstyrene, p-tert-butylstyrene, 1,3-dimethylstyrene, $\alpha$-methylstyrene, vinyl naphthalene and vinyl anthracene as a monomer skeleton were polymerized together with C5-based petroleum hydrocarbon for its modification.

The C5-based petroleum resin is preferably obtained by polymerizing the C5-based petroleum hydrocarbon with an aluminum halide catalyst.

The hydrogenated product of the C5-based petroleum resin can be obtained by hydrogenation in the presence of a hydrogenation catalyst in an inert solvent, by a method of bringing it in contact with hydrogen in the presence of a catalyst consisting of a reaction product of an organic compound containing cobalt, or an organic compound containing nickel or a mixture thereof with a reducing agent containing aluminum in an inert solvent (Japanese Examined Patent Publication No. 42-8704), a method of adding hydrogen in the presence of an inhomogeneous supporting type catalyst which supports nickel, Raney-nickel, copper chromate and the like on a carrier such as alumina and diatom earth (Japanese Examined Patent Publication No. 43-6636), a method of adding hydrogen by bringing it in contact with hydrogen in the presence of a catalyst consisting of bis (cyclopentadienyl)titanium dichloride and alkyllithium (Japanese Unexamined Patent Publication No. 59-133203), or the like, and thereby, a hydrogenated block copolymer provided for the present invention can be synthesized.

The number average molecular weight of the C5-based petroleum resin is 300 or more and preferably 600 or more. When the number average molecular weight is less than 300, the durability of a run flat tire obtained is not adequate. Further, the number average molecular weight of the C5-based petroleum resin is 10000 or less and preferably 2000 or less. When the number average molecular weight exceeds 10000, the durability of a run flat tire obtained is not adequate.

The specific examples of the C5-based petroleum resin include QUINTONE (manufactured by ZEON Corporation), MARUKAREZ (manufactured by Maruzen Petrochemical Co., Ltd.), ARKON (manufactured by Arakawa Chemical Industries Ltd.) and the like.

The content of the C5-based petroleum resin is 1 part by weight or more and preferably 2 parts by weight or more based on 100 parts by weight of the rubber component. When the content of the C5-based petroleum resin is less than 1 part by weight, adequate effect is not obtained. Further, the content of the C5-based petroleum resin is 20 parts by weight or less, preferably 15 parts by weight or less and more preferably 6 parts by weight or less based on 100 parts by weight of the rubber component. When the content of the C5-based petroleum resin exceeds 20 parts by weight, the hardness of the side reinforcing layer or bead apex obtained is lowered and exothermic heat is heightened.

Examples of the tabular natural ore used in the present invention include micas, clay, talc and the like, but micas are preferable in particular.

The micas are preferably one or more kinds selected from the group consisting of kaolinite, sericite, phlogopite and muscovite, and among these, sericite is more preferable from the viewpoint of balance of hardness with breaking strength in particular. These may be used alone or in combination of two or more.

The aspect ratio (a ratio of the maximum diameter to thickness) of the tabular natural ore is preferably 3 or more, more preferably 5 or more and further preferably 10 or more. When the aspect ratio of the tabular natural ore is less than 3, adequate rubber hardness tends to be not obtained. Further, the aspect ratio of the tabular natural ore is preferably 30 or less and more preferably 20 or less. When the aspect ratio is larger than 30, the dispersion of the tabular natural ore into a rubber tends to be lowered and strength at break tends to be lowered. Further, the aspect ratio is determined as a/b from an average long diameter, a and an average short diameter, b by observing the tabular natural ore with an electron microscope and measuring a long diameter and a short diameter for arbitrary 50 particles.

The average particle diameter of the tabular natural ore is preferably 2 $\mu$m or more, more preferably 5 $\mu$m or more and further preferably 10 $\mu$m or more. When the average particle diameter is less than 2 $\mu$m, cost is charged for pulverization and additionally, adequate rubber hardness tends to be not obtained. Further, the average particle diameter of the tabular natural ore is preferably 30 $\mu$m or less and more preferably 20 $\mu$m or less. When the average particle diameter exceeds 30 $\mu$m, the tabular natural ore is the starting point of fracture and flexural fatigue resistance tends to be lowered. Further, the average particle diameter means the average value of the long diameter of the tabular natural ore.

The content of the tabular natural ore is 5 parts by weight or more based on 100 parts by weight of the rubber component, preferably 10 parts by weight or more, and more preferably 15 parts by weight or more. When the content is less than 5 parts by weight, effect obtained by compounding the tabular natural ore is not sufficiently obtained. Further, the content of the tabular natural ore is 120 parts by weight or less, preferably 80 parts by weight or less and more preferably 60 parts by weight or less. When the content exceeds 120 parts by weight, the dispersion of the tabular natural ore into a rubber is difficult and further, heat is easily generated.

Fillers for reinforcement can be compounded in the rubber composition in the present invention in addition to the rubber component, C5-based petroleum resin and tabular natural ore. As the fillers for reinforcement, carbon black, silica, calcium carbonate, aluminum hydroxide, clay and the like can be used, but carbon black and silica are preferable from the balance of strength and elongation.

Further, the rubber composition may contain zinc oxide, wax, stearic acid, oil, a curing agent, a vulcanization accelerator and the like within the range of not damaging the effect of the present invention.

The run flat tire of the present invention has the side reinforcing layer or bead apex comprising the rubber composition. Herein, the side reinforcing layer means a lining strip layer which is disposed at the inside of the side-wall portion of the run flat tire. A vehicle can be supported even in a state in which air pressure is lost, by the existence of the side reinforcing layer in the run flat tire and superior run flat durability can be imparted. Further, the bead apex can also provide the superior run flat durability as the side reinforcing layer can provide.

Figure 1 shows the side reinforcing layer 8 and bead apex 9. As shown in Figure 1, the side reinforcing layer 8 is disposed over from the bead portion 7 to a shoulder portion in contact with the inside of a tire carcass ply 3 and disposed in a falcate shape which thickness is gradually reduced to a both end direction. Further, the side reinforcing layer is disposed in double layers over from the bead portion to the tread portion edge between the main body portion of carcass ply and its folding portion, or between a plural of carcass or reinforcing plies.

The run flat tire of the present invention exhibits superior effect when it is used for both of the side reinforcing layer and bead apex, in particular.

The strength at break ($T_B$) of the rubber composition in the present invention is preferably 10 MPa or more, more preferably 12 MPa or more and further preferably 14 MPa or more. When $T_B$ is less than 10 MPa, the side reinforcing layer or clinch apex obtained from the rubber composition is bent by the load of a vehicle at running by the run flat tire and performance as the run flat tire tends to be remarkably lowered.

Further, it is preferable that the loss elastic modulus (E") and complex elastic modulus (E*) of the rubber composition of the present invention satisfy the formula described below.

$$E''/(E^*)^2 \leq 7.0 \times 10^{-9} \, Pa^{-1}$$

E"/(E*)$^2$ is preferably $7.0 \times 10^{-9}$ Pa$^{-1}$ or less and more preferably $6.0 \times 10^{-9}$ Pa$^{-1}$ or less. When E"/(E*)$^2$ is larger than $7.0 \times 10^{-9}$ Pa$^{-1}$, exothermic heat by deformation of the tire is enlarged at running at low inner pressure and the thermal deterioration of a rubber is accelerated and thereby it tends to be fracture.

EXAMPLE

The present invention is specifically illustrated based on Example but is not limited to only these.

Various chemicals used in Example are described as below.

NR: RSS#3
BR1: VCR412 manufactured by Ube Industries Ltd. (the content of syndiotactic 1,2-polybutadiene is 12 % by weight)
BR2: BR150L manufactured by Ube Industries Ltd.
Carbon black FEF: DIABLACK E, manufactured by Mitsubishi Chemical Corporation.
Sericite: KM-8 manufactured by Nippon Forum an aspect ratio of 15 and an average particle diameter of 17 $\mu$m)
Stearic acid: Stearic acid Tsubaki" manufactured by NOF CORPORATION
Zinc oxide: Zinc oxide No.2 manufactured by Mitsui Mining & Smelting Co., Ltd.
Antioxidant: ANTIGENE 6C manufactured by Sumitomo Chemical Co., Ltd.
Silane coupling Agent: Si-75 manufactured by Degussa Japan Co., Ltd. Insoluble sulfur: MU-CRON OT manufactured by Shikoku Chemicals Corporation

C5-based petroleum resin: MARUKAREZ T-100A manufactured by Maruzen Petrochemical Co., Ltd.
Vulcanization accelerator: NOCCELER NS manufactured by OUCHISHINKO CHEMICAL INDUSTRIAL CO., LTD.

EXAMPLE 1 and COMPARATIVE EXAMPLES 1 to 3

Components other than insoluble sulfur and a vulcanization accelerator were kneaded at 150°C for 4 minutes according to the compounding content shown in Table 1. Insoluble sulfur and a vulcanization accelerator were added to the kneaded mixture and the obtained mixture was kneaded at 80°C for 3 minutes to obtain a rubber composition.
Uncured run flat tires with a size of 245/40ZR18 in which lining strip layers comprising the respective rubber compositions of Example and Comparative Examples were disposed as the side reinforcing layer at the inside of a side-wall were prepared and run flat tires were produced by vulcanization of the uncured run flat tires and then subjected to respective evaluations below.

<Strength at break $T_B$>

A sheet with a thickness of 2 mm was cut out from each of the lining strip layers of the run flat tires, and the evaluation of strength at break ($T_B$) (MPa) was carried out according to JIS K6251.

<$E''/(E^*)^2$>

A sheet with a thickness of 2 mm was cut out from each of the lining strip layers of the run flat tires and the loss elastic modulus E'' and complex elastic modulus E* were measured at a measurement temperature of 70°C, an initial strain of 10 %, a dynamic strain of $\pm$ 1 % and a frequency of 10 Hz with a viscoelastic spectrometer manufactured by Iwamoto Seisakusho Co., Ltd., to calculate $E''/(E^*)^2$.

<Run flat performance>

A car ran at a speed of 80 km/hr at inner air pressure of 0 kPa on a drum using the run flat tires and running distances until the tires were broken were compared. Comparative Example 1 was referred to as basis (100) and respective tires were indicated by exponent. It is indicated that the larger the value is, the more superior the run flat durability is. Each of evaluation results is shown in Table 1.

TABLE 1

|  | Ex.1 | Com. Ex.1 | Com. Ex.2 | Com. Ex.3 |
|---|---|---|---|---|
| Amount (parts by weight) |  |  |  |  |
| NR | 60 | 60 | 60 | 60 |
| BR1 | 20 | 20 | 20 | 20 |
| BR2 | 20 | 20 | 20 | 20 |
| Carbon black FEF | 50 | 50 | 50 | 50 |
| Sericite | 30 | 30 | 30 | 30 |
| Stearic acid | 2 | 2 | 2 | 2 |
| Zinc oxide | 3 | 3 | 3 | 3 |
| Antioxidant | 1 | 1 | 1 | 1 |
| Silane coupling agent | 3 | 3 | 3 | 3 |
| Insoluble sulfur | 5.5 | 5.5 | 5.5 | 5.5 |
| C5 petroleum resin | 2 | - | 0.5 | 30 |
| Valcanization accelerator | 2 | 2 | 2 | 2 |
| Evaluation results |  |  |  |  |
| $T_B$ [MPa] | 14.7 | 13.6 | 13.5 | 14.1 |
| $E''/(E^*)^2$ [$10^{-9}Pa^{-1}$] | 6.0 | 5.8 | 5.9 | 7.8 |
| Run flat property | 186 | 100 | 100 | 76 |

According to the present invention, there can be provided a run flat tire in which the low exothermic property and high hardness of the side reinforcing layer or bead apex are compatible and durability is improved, by using a rubber composition containing a specific C5-based petroleum resin and lamellar natural ore for the side reinforcing layer or bead apex.

## Claims

1. A run flat tire having a side reinforcing layer or a bead apex comprising a rubber composition containing

   1 to 20 parts by weight of a C5-based petroleum resin having a number average molecular weight of 300 to 10000 which is obtained by polymerizing C5-based petroleum hydrocarbon and
   5 to 120 parts by weight of lamellar natural ore based on 100 parts by weight of a rubber component.

2. The run flat tire according to Claim 1, wherein loss elastic modulus E'', complex elastic modulus E* and strength at break $T_B$ of the rubber composition satisfy the following formulae:

$$E''/(E^*)^2 \le 7.0 \times 10^{-9} \text{ Pa}^{-1}$$

$$T_B \ge 10 \text{ MPa}$$

## Patentansprüche

1. Notlaufreifen mit einer seitenverstärkenden Wand oder einem Wulstkernreiter enthaltend eine Kautschukzusammensetzung, welche enthält:

   1 bis 20 Gewichtsteile eines auf $C_5$-Petroleum basierenden Harzes mit einem zahlengemittelten Molekulargewicht zwischen 300 und 10.000, welches durch Polymerisieren eines auf $C_5$-Petroleum basierenden Kohlenwasserstoffes erhalten worden ist, und
   5 bis 120 Gewichtsteile eines streifenförmigen natürlichen Erzes bezogen auf 100 Gewichtsteile einer Kautschukkomponente.

2. Notlaufreifen nach Anspruch 1, wobei das elastische Verlustmodul E'', das elastische Komplexmodul E* und die Bruchfestigkeit $T_B$ der Kautschukzusammensetzung die nachfolgenden Formeln erfüllt:

$$E''/(E^*)^2 \le 7,0 \times 10^{-9} \text{ Pa}^{-1}$$

$$T_B \ge 10 \text{ MPa.}$$

## Revendications

1. Pneumatique à roulage à plat ayant une couche de renforcement latéral ou un apex de talon, comprenant une composition en caoutchouc contenant :

   1 à 20 parties en poids d'une résine de pétrole à base de C5, ayant un poids moléculaire moyen en nombre de 300 à 10 000, qui est obtenu par polymérisation d'un hydrocarbure de pétrole à base de C5 et
   5 à 120 parties en poids d'un minerai naturel lamellaire pour 100 parties en poids d'un composant de caoutchouc.

2. Pneumatique à roulage à plat selon la revendication 1, dans lequel le module de perte élastique E'', le module complexe élastique E* et la résistance à la rupture $T_B$ de la composition de caoutchouc satisfont aux formules

suivantes :

$$E''/(E*)^2 \leq 7{,}0 \times 10^{-9} \; Pa^{-1}$$

$$T_B \geq 10 \; MPa$$

$$E''/(E*)^2 \leq 7{,}0 \times 10^{-9} \; Pa^{-1}$$

# FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004027003 A
- JP 8067776 A
- JP 2003292685 A
- EP 1514901 A1
- US 20040122157 A1
- JP 428704 B
- JP 436636 B
- JP 59133203 A